# EUROPEAN PATENT APPLICATION

(11) **EP 4 362 194 A1**
(43) Date of publication of application: **01.05.2024**
(21) Application number: 22828468.3
(22) Date of filing: 22.06.2022
(51) Int. Cl.: H01M 50/293, H01M 50/571, H01M 50/588, H01M 50/593

(54) **PARTITION MEMBER, BATTERY MODULE, AND BATTERY PACK**

(30) Priority: 23.06.2021 JP 2021103794
(71) Applicant: Mitsubishi Chemical Corporation, Chiyoda-ku Tokyo 100-8251 (JP)
(72) Inventor: KAWAI, Tomohiro, Tokyo 100-8251 (JP); HASHIMOTO, Kei, Tokyo 100-8251 (JP)
(74) Representative: Vossius & Partner Patentanwälte Rechtsanwälte mbB
(86) International application number: PCT/JP2022/024952
(87) International publication number: WO 2022/270552

(57) **Abstract**

A partition member, which separates objects to be separated from each other, includes a porous sheet, and a water absorbing material provided at least either on a surface of the porous sheet or inside the porous sheet. The partition member that has dimensions of 100 mm × 60 mm and has been stored for 24 hours at a temperature of 25°C, a humidity of 40%, and an atmospheric pressure of 1 atm is used as a sample, and a ratio of a water absorption volume when a portion of 10 mm from an lower end of a 60 mm side of the sample is immersed in water for 2 minutes, to a volume of the sample {the water absorption volume (cm³) divided by a volume (cm³) of the partition member} is in a range of 0.1 to 0.9.

## Description

### [Technical Field]

The present invention relates to a partition member, a battery module, and a battery pack.

### [Background Art]

Conventionally, a battery pack to be mounted on an electric vehicle or the like includes a plurality of battery modules arranged in a case. Each battery module is an assembled battery that includes a plurality of unit cells (referred to as cells), and partition members are provided between the cells and between the battery modules.

An example of such partition members is a partition member that is made of a highly heat-resistant resin (for example, see PTL1). Another example is a partition member that is made of heat-resistant fiber or aerogel (for example, see PTL 2 and PTL 3). Yet another example is a partition member that is made of mica (see PTL 4).

### [Citation List]

### [Patent Literature]

[PTL 1] Japanese Patent Application Publication No. 2010-97693
[PTL 2] WO 2018/003478
[PTL 3] WO 2018/211906
[PTL 4] Japanese Patent Application Publication No. 2012-33464

### [Summary of the Invention]

### [Technical Problem]

When a battery pack is used, condensed water may be generated inside the battery pack or a battery component such as a battery module, due to temperature fluctuations. Condensed water causes micro short circuits and metal corrosion. Therefore, there has been demand for a member that has water absorption properties and is capable of retaining water. Furthermore, since the temperature of a cell reaches 500°C or higher during thermal runaway, it is desired that the partition members have heat resistance.

However, the partition member shown in PTL 1 does not have water absorption properties. There is a problem of low heat resistance compared to materials that contain an inorganic material. The partition members shown in PTL 2 and PTL 3 can be expected to have high heat resistance, but such partition members have a problem of low water retention.

The partition member shown in PTL 4 can be expected to have high heat resistance, but such a partition member has a problem of low water absorption and low water retention.

An object of the present invention is to provide a partition member that is capable of desirably treating condensed water. Specifically, an object is to provide a partition member with an excellent water absorption amount and an excellent water absorption amount retention rate, and a battery module and a battery pack that each include the partition member.

### [Solution to Problem]

An embodiment of the present invention includes the partition member, a battery module, and a battery pack described below.
[1] A partition member that separates objects to be separated from each other, the partition member including: a porous sheet; and a water absorbing material provided at least either on a surface of the porous sheet or inside the porous sheet, wherein the partition member that has dimensions of 100 mm × 60 mm and has been stored for 24 hours at a temperature of 25°C, a humidity of 40%, and an atmospheric pressure of 1 atm is used as a sample, and a ratio of a water absorption volume when a portion of 10 mm from an lower end of a 60 mm side of the sample is immersed in water for 2 minutes, to a volume of the sample {the water absorption volume (cm³) divided by a volume (cm³) of the partition member} is in a range of 0.1 to 0.9.
[2] The partition member according to [1], further including an insulating layer formed on a surface of the porous sheet located in a thickness direction thereof.
[3] The partition member according to [2], wherein a ratio of a thickness of the insulating layer to a thickness of the porous sheet (the thickness of the insulating layer divided by the thickness of the porous sheet) is in a range of 0.0001 to 0.1.
[4] The partition member according to any one of [1] to [3], wherein the porous sheet is a glass fiber sheet, an inorganic fiber sheet, an inorganic particle sheet, a piece of paper, or a combination thereof.
[5] The partition member according to any one of [1] to [4], wherein the water absorbing material contains a water absorbing resin.
[6] The partition member according to [5], wherein the water absorbing resin contains polyvinyl alcohol.
[7] The partition member according to any one of [1] to [6], wherein the insulating layer is a resin film attached to the porous sheet.
[8] The partition member according to [7], wherein the resin film is made of polypropylene.
[9] The partition member according to any of [1] to [8], wherein the partition member that has dimensions of 100 mm × 60 mm and has been stored for 24 hours at a temperature of 25°C, a humidity of 40%, and an atmospheric pressure of 1 atm is used as a sample, and a water absorption amount maintenance rate after 30 minutes, relative to a water absorption amount when a portion of 10 mm from a lower end of a 60 mm side of the sample is immersed in water for 2 minutes, is in a range of 60% to 100% by weight.
[10] The partition member according to any one of [1] to [9], wherein the partition member separates batteries from each other, or a battery and a member other than the battery from each other.
[11] A battery module comprising the partition member according to any one of [1] to [10].
[12] A battery pack comprising the partition member according to any one of [1] to [10].

### [Advantageous Effects of Invention]

According to the present invention, it is possible to provide a partition member having excellent water absorption amount and water absorption amount retention rate, and a battery module and a battery pack that include the partition member.

### [Brief Description of Drawings]

[Fig. 1]

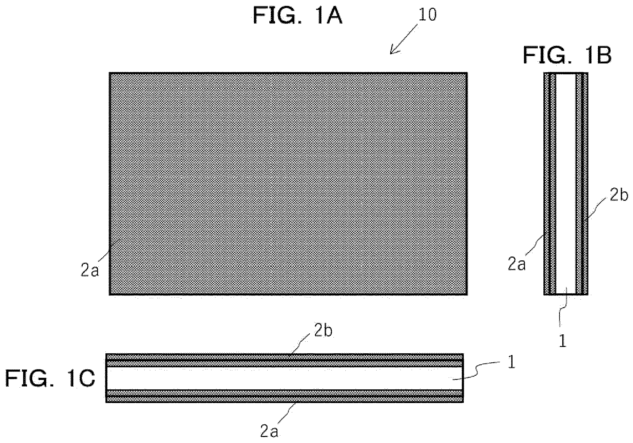

   Figs. 1A to 1C show a first configuration example of a partition member according to an embodiment.
[Fig. 2]

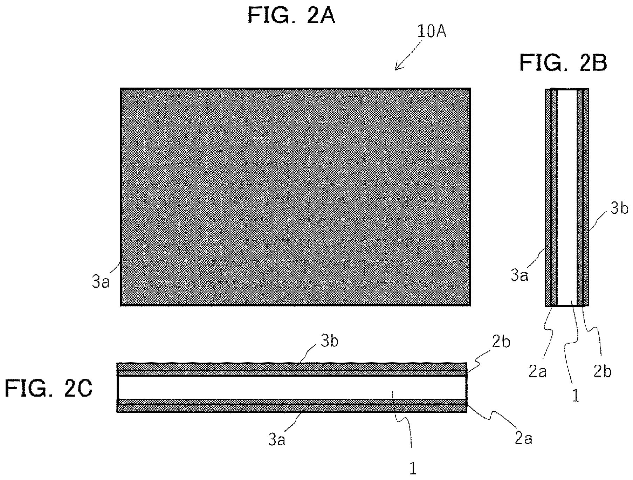

   Figs. 2A to 2C show a second configuration example of the partition member.
[Fig. 3]

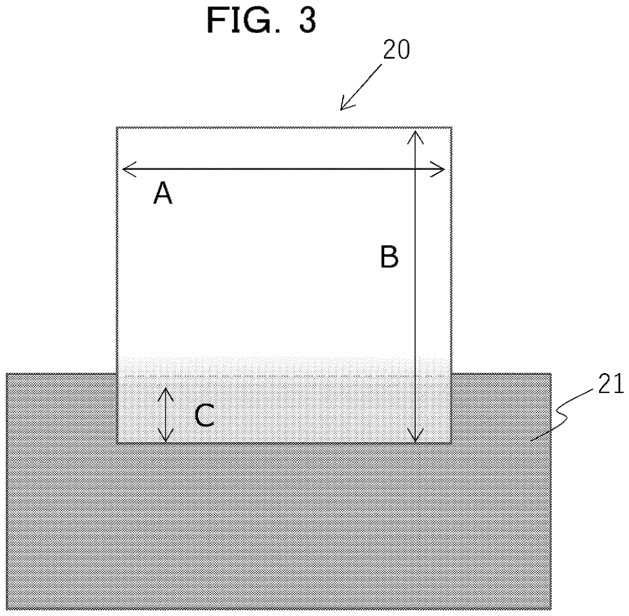

   Fig. 3 illustrates a first experiment.
[Fig. 4]

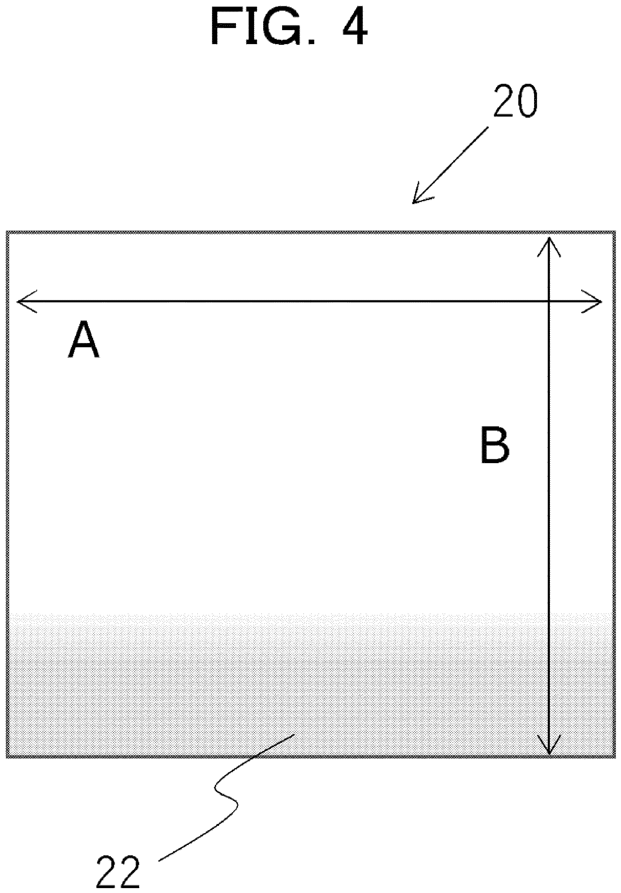

   Fig. 4 illustrates a second experiment.
[Fig. 5]

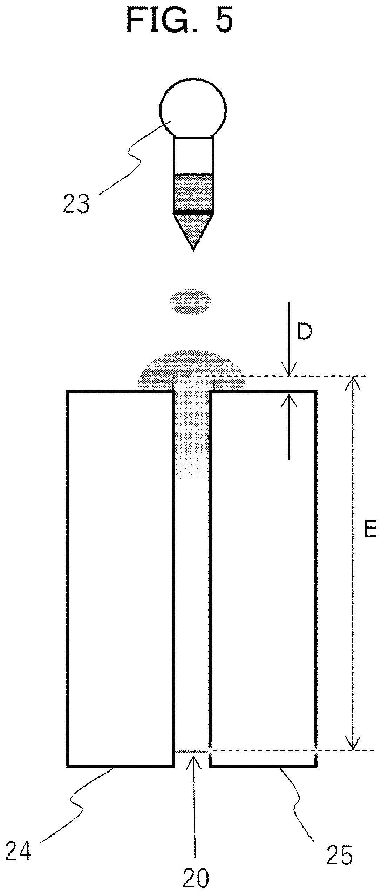

   Fig. 5 illustrates a third experiment.

### [Description of Embodiments]

Hereinafter, the present invention will be described. The following description of the embodiment shown in the drawings is an example, and the present invention is not limited to the configuration of the embodiment shown below.

### [Partition member]

A partition member according to the embodiment is a partition member that separates objects to be separated from each other. The partition member includes a porous sheet and a water-absorbing material provided at least either on the surface of the porous sheet or inside the porous sheet.

With the partition member according to the embodiment, the water-absorbing material can absorb and retain moisture such as condensed water around the partition member. Therefore, it is possible to prevent moisture such as condensed water around the partition member from coming into contact with the objects to be separated, and causing short circuits between components of the objects to be separated and corrosion of the objects to be separated.

The partition member according to the embodiment is used as a sample. A partition member with dimensions of 100 mm × 60 mm is used as a sample. "The dimensions of 100 mm × 60 mm" means that the partition member has dimensions in the horizontal (width) direction, the vertical (height) direction, and the thickness direction, and the horizontal (width) × vertical (height) dimensions are 100 mm × 60 mm. A partition member having dimensions of 100 mm × 60 mm and stored for 24 hours at a temperature of 25°C, a humidity of 40%, and an atmospheric pressure of 1 atm is used as a sample. The partition member is characterized in that the ratio of the water absorption volume when a portion of 10 mm from the lower end of the 60 mm side of the sample is immersed in water for 2 minutes to the volume of the sample {the water absorption volume (cm³) divided by the volume of the partition member (cm³)} is 0.1 to 0.9. Such a volume ratio is preferably in the range of 0.1 to 0.8, and more preferably in the range of 0.2 to 0.5. If the volume ratio is too large, the partition member tends to be easily deformed during water absorption, and if the volume ratio is too small, the water absorption capacity tends to be low.

The above water absorption volume of a partition member means the water absorption volume of a sample when 10 mm from the lower end of the 60 mm side of the sample is immersed in water for 2 minutes, where the sample is a partition member that has dimensions of 100 mm × 60 mm and has been stored for 24 hours at a temperature of 25°C, a humidity of 40%, and an atmospheric pressure of 1 atm.

A sample of the partition member according to the embodiment is a partition member that has dimensions of 100 mm × 60 mm and has been stored for 24 hours at a temperature of 25°C, a humidity of 40%, and an atmospheric pressure of 1 atm, and in a case where the water absorption amount of the sample when a portion of 10 mm from the lower end of the 60 mm side of the sample is immersed in water for 2 minutes is 100% by weight, the water absorption amount maintenance rate after 30 minutes is preferably in the range of 60% to 100% by weight. The water absorption amount maintenance rate is preferably in the range of 65% to 100% by weight, and more preferably in the range of 70% to 100% by weight. If the weight is too large, the partition member tends to be easily deformed during water absorption, and if the weight is too small, the water absorption capacity tends to be low.

When the same immersion test is carried out, the water absorption amount maintenance rate after 1 hour is preferably in the range of 40% to 100% by weight, and more preferably in the range of 50% to 100% by weight. If the weight is too large, the partition member tends to be easily deformed during water absorption, and if the weight is too small, the water absorption retention capacity tends to be low.

The objects to be separated are objects to be separated from each other by a partition member, and batteries, for example. Examples of batteries include unit cells (cells), an assembled battery (a battery modules) that includes a plurality of unit cells, and a battery pack that includes a plurality of assembled batteries. However, the objects to be separated from each other may be members other than a battery. That is to say, the partition member is used to separate batteries from each other, or a battery and a member other than the battery from each other, for example.

The porous sheet is a sheet having a space inside and preferably has heat resistance. In the present invention, if the degree of weight loss when a porous sheet is exposed to 300°C for 30 minutes is 30% or less, the porous sheet is said to have heat resistance. The space inside the porous sheet can be selected as appropriate, but in order to increase the water absorption amount, it is preferable that the porous sheet has a space of 10% or more of the volume of the porous sheet, and from the viewpoint of holding a solid inside to maintain the shape of the porous sheet, it is preferable that the porous sheet has a space of 90% or less. In addition to having heat resistance, it is preferable that the porous sheet is flame retardant, has low thermal conductivity, is lightweighted, and can be compressed. It is preferable that the porous sheet is, for example, an inorganic fiber sheet, an inorganic particle sheet, a piece of paper, or a combination thereof.

The water-absorbing material is a material that has absorbency (water absorption properties) to absorb moisture. The water-absorbing material is provided at least either on the surface or in the internal space of the porous sheet. The water-absorbing material absorbs and retains moisture such as condensed water, and prevents moisture from causing short circuits between components of a battery pack, a battery module, or unit cells, or corrosion of the components. That is to say, due to the water-absorbing material provided in the partition member, the partition member can have desirable water absorption properties and water retention properties. As a result, a partition member having excellent water absorption amount and water absorption amount maintenance rate (also referred to as a water absorption amount retention rate) can be obtained. It is preferable that the water-absorbing material contains a water absorbing resin (water-absorbing polymer). It is preferable that the water absorbing resin is polyvinyl alcohol (PVOH).

With the use of PVOH, the water-absorbing material has suitable water-holding properties (water retention properties), and the water once absorbed can be prevented from being released again. However, the water absorbing resin may be other than PVOH. For example, the water absorbing resin can include sodium polyacrylate or carboxymethyl cellulose instead of PVOH. The ratio of the water-absorbing material provided at least either on the surface of the porous sheet or inside the porous sheet to the porous sheet can be adjusted as appropriate according to the characteristics of the porous sheet. For example, it is preferable that the ratio is from 1% by weight to 25% by weight because effective water retention properties can be obtained. The ratio is more preferably in the range of 5% to 20% by weight, and even more preferably in the range of 8% to 15% by weight. In addition, PVOH can be used in a cross-linked state with a cross-linking agent such as boric acid or borax.

In the porous sheet, an insulating layer may be further formed on the surface in the thickness direction of the porous sheet provided with the water-absorbing material. The insulating layer may be on one or both of the two surfaces of the porous sheet in the thickness direction. Providing the insulating layer allows the partition member to have desirable insulating properties in the thickness direction thereof. It is preferable that the insulation of the partition member is, for example, 20 Ω or more in terms of electrical resistance determined by the measurement method described in Examples below. It is preferable that the insulating layer is a resin film (resin layer) attached to the porous sheet, for example, and it is preferable that the resin film is made of polypropylene (PP). The resin film may be made of resin other than PP. Examples of the resin used for the resin film include polyethylene, polypropylene, polystyrene, nylon, acrylic resin, epoxy resin, polyurethane, polyether ether ketone, polyethylene terephthalate, polyphenylene sulfide, polycarbonate, aramid, and so on. In particular, it is preferable that the resin is at least one selected from polypropylene, nylon, and polyethylene terephthalate.

Figs. 1A, 1B, and 1C are diagrams showing a first configuration example of a partition member according to the embodiment. Fig. 1A is a front view of the partition member 10 according to the first configuration, Fig. 1B is a right side view (left side view) of the partition member 10, and Fig. 1C is a plan view (bottom view) of the partition member 10.

Hereinafter, a case where PVOH is used as the water-absorbing material will be described as an example. The partition member 10 includes a porous sheet 1 that is plate-shaped, and water-absorbing materials 2a and 2b. For example, the porous sheet 1 is a porous sheet containing glass fiber, and has a space inside. The water-absorbing material 2a is provided on the porous sheet 1 by coating (applying or covering) the front and back surfaces of the porous sheet 1 with PVOH. When PVOH is applied, the PVOH enters the porous internal space, and the water-absorbing materials 2a and 2b, which are PVOH, are distributed on the surface and inside of the porous sheet 1. However, each of the water-absorbing materials 2a and 2b may be distributed only on the surface of the porous sheet 1 or inside the porous sheet 1. Note that one of the water-absorbing materials 2a and 2b may be omitted. By using a water absorbing resin having preferable water-holding properties as the water-absorbing materials 2a and 2b, the water absorbed by the water-absorbing materials 2a and 2b is retained by the water-absorbing materials 2a and 2b, and is not easily released to the outside. As a result, desirable absorption and retention of condensed water can be realized.

Figs. 2A, 2B, and 2C are diagrams showing a second configuration example of the partition member, where Fig. 2A is a front view of a partition member 10A according to the second configuration, Fig. 2B is a right side view (left side view) of the partition member 10A, and Fig. 2C is a plan view (bottom view) of the partition member 10A.

In the partition member 10A according to the second configuration example, the water-absorbing materials 2a and 2b are provided on the porous sheet 1, similarly to the first configuration. Furthermore, resin layers 3a and 3b are formed on the water-absorbing materials 2a and 2b on the front and back surfaces of the porous sheet 1. The resin layers 3a and 3b are resin layers that are made of PP, and serve as insulating layers that improve the insulating properties in the thickness direction of the partition member 10A. As a result, the insulating properties of the partition member 10A are improved in the thickness direction thereof (the direction from the front to the back or vice versa). In addition, the resin layers 3a and 3b that are made of PP do not allow water to pass therethrough, and therefore moisture absorbed from the side surfaces of the partition member 10A is suppressed from being released from the front or back surface of the partition member 10A. As a result, the resin layers 3a and 3b serve as members that improve the water-holding properties. Therefore, even with a configuration in which the porous sheet 1 is not provided with the water-absorbing materials 2a and 2b, but is provided with the resin layers 3a and 3b made of PP, the water absorption properties and water-holding properties can be improved. Note that appropriate strength can be obtained if the thickness of the resin layers 3a and 3b is, for example, preferably in the range of 5 µm or more, preferably in the range of 10 µm to 100 µm.

It is preferable that the porous sheet contains a fibrous material (also referred to as a fibrous inorganic material) and/or a set of inorganic particles (also referred to as a powdered inorganic material). Examples of fibrous materials (fibrous inorganic materials) include organic fibers such as paper, a cotton sheet, a polyimide fiber, an aramid fiber, and a polytetrafluoroethylene (PTFE) fiber, and inorganic fibers such as a glass fiber, rock wool, a ceramic fiber, and a biosoluble inorganic fiber. Specifically, a silica-alumina fiber (silica:alumina = 40:60 to 1:99), a mullite fiber, or an alumina fiber can be used as the ceramic fiber.

The set of inorganic particles (powdered inorganic material) is at least one selected from the group consisting of silica particles, alumina particles, calcium silicate, aluminum hydroxide, a clay mineral, vermiculite, mica, cement, perlite, fumed silica, and aerogel. Among these, at least one selected from the group consisting of silica particles, alumina particles, calcium silicate, aluminum hydroxide, and vermiculite is particularly preferable. More preferable inorganic particles are calcium silicate or aluminum hydroxide.

Among the types of calcium silicate, xonotlite, tobermorite, wollastonite, and gyrolite are preferable, and gyrolite is particularly preferable. Gyrolite, which has a petal-like structure, maintains a porous structure even when compressed and deformed, so it has excellent water-holding properties. Major examples of clay minerals include magnesium silicate (including talc and sepiolite), montmorinite, and kaolinite.

The porous sheet is preferably an inorganic fiber sheet, an inorganic particle sheet, or paper among the above examples, or a combination thereof. Furthermore, it is particularly preferable that the porous sheet is at least one selected from the group consisting of paper, glass fiber, rock wool, ceramic fiber, and biosoluble inorganic fiber.

The thickness of such a porous sheet is usually in the range of 0.2 mm to 10 mm, preferably in the range of 0.5 mm to 8 mm, and particularly preferably in the range of 0.8 mm to 4 mm. If the thickness is too thick, the volumetric energy density of the assembled battery tends to be lowered, and if the thickness is too thin, water absorption tends to be reduced.

The ratio of the thickness of the insulating layer to the thickness of the porous sheet (the thickness of the insulating layer divided by the thickness of the porous sheet) is usually in the range of 0.0001 to 0.1, preferably in the range of 0.001 to 0.01. If the thickness is too thick, water absorption tends to be small, and if the thickness is too thin, the electrical insulating properties tend to be reduced.

The thickness of the partition member according to the present invention is usually in the range of 0.2 mm to 10 mm, preferably in the range of 0.5 mm to 8 mm, and particularly preferably in the range of 0.8 mm to 4 mm. If the thickness is too thick, the volumetric energy density of the assembled battery tends to be lowered, and if it is too thin, water absorption tends to be reduced.

### [Examples]

### <Experiment 1>

Experiment 1 was carried out as a demonstration experiment of the effects of the partition members 10 and 10A according to the first and second configuration examples described above. For Experiment 1, a plurality of types of sample sheets 20a to 20h described below were prepared. When the sample sheets 20a to 20h are not distinguished from each other, they will be denoted as "sample sheets 20". The dimensions of the sample sheets 20a to 20h were: a width A was 100 mm and a height B was 60 mm (Note that the thicknesses were different).
(Sample sheet 20a) glass fiber paper (thickness: 0.9 mm)
(Sample sheet 20b) glass fiber paper (thickness: 0.9 mm) with a PP film (thickness: 20 um) attached to one surface thereof
(Sample sheet 20c) glass fiber paper (thickness: 0.9 mm) with PP films (thickness: 20 µm) attached to both surfaces thereof
(Sample sheet 20d) glass fiber paper (thickness: 0.9 mm) with PVOH applied to both surfaces thereof (PVOH coated)
(Sample sheet 20e) glass fiber paper (thickness: 0.9 mm) with PVOH applied to both surfaces thereof and a PP film (thickness: 20 um) attached to one surface thereof
(Sample sheet 20f) glass fiber paper (thickness: 0.9 mm) with PVOH applied to both surfaces thereof and PP films (thickness: 20 um) attached to both surfaces thereof
(Sample sheet 20g) A sheet made of PP and having a thickness of 1 mm
(Sample sheet 20h) A sheet made of mica and having a thickness of 0.5 mm

Here, the method for applying PVOH and the conditions for applying PVOH during the production of each of the sample sheets 20d, 20e, and 20f were common and were as follows. That is to say, a piece of glass fiber paper was immersed in a 10% PVOH aqueous solution and thereafter dried. The application rate of PVOH to the weight of the porous sheet was 11% by weight.

The steps of the procedure for Experiment 1 were as follows.
(Step 1) The weight of each of the sample sheets 20a to 20h stored for 24 hours at a temperature of 25°C, a humidity of 40%, and an atmospheric pressure of 1 atm was measured.
(Step 2) As shown in Fig. 3, a portion of 10 mm from the lower end of the 60 mm side of each of the sample sheets 20a to 20h, relative to the volume of the sample, was immersed in water 21 for 2 minutes.
(Step 3) The weight of each of the sample sheets 20a to 20h immersed in water was measured.
(Step 4) The water absorption amount of each of the sample sheets 20a to 20h was calculated from the weight change of the sample sheet.

The following Table 1 is a table showing the results of Experiment 1.

**[Table 1]**

| | Base Material | Water-absorbing Material | Insulating Layer | Weight Before Immersion(g) | Volume Before Immersion (cm³) | Weight After 2 Minutes Immersion (g) | Water Absortion Volume (cm³)* | Volume Ratio** |
|---|---|---|---|---|---|---|---|---|
| Comparative Example 1 - 1 | Glass Fiber Paper | None | None | 3.6 | 5.4 | 5.0 | 1.4 | 0.26 |
| Comparative Example 1 - 2 | Glass Fiber Paper | None | PP Film (One Surface) | 3.3 | 5.4 | 4.4 | 1.0 | 0.19 |
| Comparative Example 1 - 3 | Glass Fiber Paper | None | PP Film (One Surface) | 4.1 | 54 | 4.6 | 0.5 | 0.10 |
| Example 1 - 1 | Glass Fiber Paper | PVOH | None | 3.8 | 5.4 | 5.5 | 1.7 | 0.31 |
| Example 1 - 2 | Glass Fiber Paper | PVOH | PP Film (One Surface) | 3.8 | 5.4 | 5.7 | 2.0 | 0.36 |
| Example 1 - 3 | Glass Fiber Paper | PVOH | PP Film (One Surface) | 4.3 | 5.4 | 5.4 | 1.1 | 0.21 |
| Comparative Example 1 - 4 | PP Sheet | None | None | 8.7 | 6.0 | 8.7 | 0.0 | 0.00 |
| Comparative Example 1 - 5 | Mica Sheet | None | None | 7.8 | 3.0 | 7.9 | 0.1 | 0.03 |

| | | | | | | | | |
|---|---|---|---|---|---|---|---|---|
| * The water absorption volume is a value obtained by converting the water absorption weight, which is calculated by subtracting (Weight Before Immersion] from[Weight After2 Minutes Immersion], into a volume, assuming that the specific gravity of water ist 1 , * * Volume Ratio = Water Absorption Volume [cm³]/Volume [cm³] of Partition Member | | | | | | | | |

In Table 1, Comparative Example 1-1 shows the results of Experiment 1 carried out using the sample sheet 20a. Comparative Example 1-2 shows the results of Experiment 1 carried out using the sample sheet 20b. Comparative Example 1-3 shows the results of Experiment 1 carried out using the sample sheet 20c. Example 1-1 shows the results of Experiment 1 carried out using the sample sheet 20d. Example 1-2 shows the results of Experiment 1 carried out using the sample sheet 20e. Example 1-3 shows the results of Experiment 1 carried out using the sample sheet 20f. Comparative Example 1-4 shows the results of Experiment 1 carried out using the sample sheet 20g. Comparative Example 1-5 shows the results of Experiment 1 carried out using the sample sheet 20h.

It was found that the water absorption amount in a case where PVOH was applied to a piece of glass fiber paper (the piece of glass fiber paper was coated with PVOH) (Example 1-1) was higher than the water absorption amount in a case where PVOH was not applied (Comparative Example 1-1). The water absorption amount in a case where a PP film was attached to a piece of glass fiber paper (Comparative Examples 1-2 and 1-3) was lower than the water absorption amount in a case where a PP film was not attached to the piece of glass fiber paper (Comparative Example 1-1). However, it was possible to achieve a sufficiently higher water absorption amount than in the case of using a PP sheet (Comparative Example 1-4) or a mica sheet (Comparative Example 1-5).

### <Experiment 2>

Experiment 2 was carried out as a demonstration experiment of the effects of the partition members 10 and 10A. For Experiment 2, a plurality of types of sample sheets 20 (sample sheets 20a to 20f and 20h) described in Experiment 1 were prepared. The dimensions of the sample sheets 20a to 20f and 20h were the same as those in Experiment 1.

The steps of the procedure for Experiment 2 were as follows.
(Step 1) The weight of each of the sample sheets 20a to 20f and 20h was measured.
(Step 2) As shown in Fig. 4, 1 g to 2 g of water was dropped onto a lower end portion 22 of the 60 mm side of each of the sample sheets 20a to 20f and 20h, so as to be absorbed into the sample sheet. However, for the sample sheets 20c and 20f, in which PP films were attached to both surfaces of a piece of glass fiber paper, the PP films were attached after water was dropped. The sample sheet 20h, which was a mica sheet, hardly absorbs water, so the next step was carried out after wiping off the water that was not absorbed into the inside of the sheet.
(Step 3) The sample sheets 20a to 20f and 20h impregnated with water were left indoors (room temperature 23°C, relative humidity 50%), and the weights were measured after 30 minutes and after 1 hour.
(Step 4) The water absorption amount maintenance rate of each of the sample sheets 20a to 20f and 20h was calculated from the weight change of the sample sheet.

Table 2 is a table showing the results of Experiment 2.

**[Table 2]**

| | Base Material | Water-absorbing Material | Insulating Layer | | Initial Weight | Immediately After Immersion | 30min | 1 hr |
|---|---|---|---|---|---|---|---|---|
| Comparative Example 2 - 1 | Glass Fiber Paper | None | None | Sample Weight (g) | 3.69 | 5.1 | 4.4 | 4.2 |
| | | | | Water Absorption Amount (g) | | 1.4 | 0.7 | 0.5 |
| | | | | Water Absorption Amount Maintanance Rate (g) | | 100.0 | 51.1 | 37.6 |
| Comparative Example 2 - 2 | Glass Fiber Paper | None | PP Film (One Surface) | Sample Weight (g) | 3.32 | 4.9 | 4.2 | 4 |
| | | | | Water Absorption Amount (g) | | 1.6 | 0.8 | 0.7 |
| | | | | Water Absorption Amount | | 100.0 | 54.2 | 45.2 |
| Comparative Example 2 - 3 | Glass Fiber Paper | None | PP Film (Both Surfaces) | Sample Weight (g) | 4.07 | 5.2 | 5.1 | 5.1 |
| | | | | Water Absorption Amount (g) | | 1.2 | 1.1 | 1 |
| | | | | Water Absorption Amount Maintenance Rate (%) | | 100.0 | 90.5 | 88.8 |
| Example 2 - 3 | Glass Fiber Paper | PVOH | None | Sample Weight (g) | 3.89 | 5.4 | 5.0 | 4.8 |
| | | | | Water Absorption Amount (g) | | 1.5 | 1.1 | 0.9 |
| | | | | Water Absorption Amount Maintenance Rate (%) | | 100.0 | 74.0 | 59.6 |
| Example 2 - 4 | Glass Fiber Paper | PVOH | PP Film (Ore Surface) | Sample Weight (g) | 3.74 | 5.2 | 4.8 | 4.6 |
| | | | | Water Absorption Amount (g) | | 1.5 | 1.1 | 0.8 |
| | | | | Water Absorption Amount Maintenance Rate (%) | | 100.0 | 73.3 | 54 |
| Example 2 - 5 | Glass Fiber Paper | 5 PVOH | PP Film (Both Surfaces) | Sample Weight (g) | 4.44 | 5.9 | 5.9 | 5.9 |
| | | | | Water Absorption Amount (g) | | 1.5 | 1.5 | 1.4 |
| | | | | Water Absorption Amount Maintenance Rate (%) | | 100.0 | 99.3 | 98 |
| Comparative Example 2 - 4 | Mica Sheet (0.5mm) | None | None | Sample Weight (g) | 7.8 | 7.9 | 7.9 | 7.9 |
| | | | | Water Absorption Amount (g) | | 0.1 | 0.1 | 0.1 |
| | | | | Water Absorption Amount Maintenance Rate (%) | | 100.0 | 85.7 | 85.7 |

In Table 2, Comparative Example 2-1 shows the results of Experiment 2 carried out using the sample sheet 20a. Comparative Example 2-2 shows the results of Experiment 2 carried out using the sample sheet 20b. Comparative Example 2-3 shows the results of Experiment 2 carried out using the sample sheet 20c. Example 2-1 shows the results of Experiment 2 carried out using the sample sheet 20d. Example 2-2 shows the results of Experiment 2 carried out using the sample sheet 20e. Example 2-3 shows the results of Experiment 2 carried out using the sample sheet 20f. Comparative Example 2-4 shows the results of Experiment 2 carried out using the sample sheet 20h.

Comparing Comparative Examples 2-1 to 2-3 and Examples 2-1 to 2-3, it was found that the water absorption amount maintenance rate (water-holding properties) was high in cases where a piece of glass fiber paper was coated with POVH or a PP film was attached to the piece of glass fiber paper. The results of Comparative Example 2-4 show that the mica sheet is not suitable because it absorbs very little water.

### <Experiment 3>

Experiment 3 was carried out as a demonstration experiment of the effects of the partition members 10 and 10A. For Experiment 3, a plurality of types of sample sheets 20 (sample sheets 20a to 20c, 20e, 20g, and 20h) described in Experiment 1 were prepared. The dimensions of the sample sheets 20a to 20c, 20e, 20g, and 20h were the same as those in Experiment 1.

The steps of the procedure for Experiment 3 were as follows.
(Step 1) As shown in Fig. 5, each of the sample sheets 20 (20a to 20c, 20e, 20g, and 20h) was sandwiched between two brass plates (150 mm × 100 mm × 5 mm) 24 and 25 so as to be layered. At this time, each sample sheet 20 was sandwiched so that the width direction A (100 mm: Fig. 3) of the sample sheet 20 coincided with the height direction of the brass plates 24 and 25 (see E in Fig. 5). In addition, each sample sheet 20 was sandwiched so that the upper end thereof protruded by 2 mm from the brass plates 24 and 25. The brass plates 24 and 25 were intended to be objects to be partitioned.
(Step 2) Using a dropper 23, water was dropped twice from above the sample sheet 20 so that the water droplets straddled the sample sheet 20 and touched the brass plates 24 and 25. After 5 minutes, the electrical resistance between the brass plates 24 and 25 was measured.

Table 3 is a table showing the results of Experiment 3.

**[Table 3]**

| | Base Material | Water-absorbing Material | Insulating Layer | Electrical Resistance (MΩ)₅ Minutes After Dropping Water |
|---|---|---|---|---|
| Comparative Example 3 - 1 | Glass Fiber Paper | None | None | 2.9 |
| Comparative Example 3 - 2 | Glass Fiber Paper | None | PP Film (One Surface) | 250 or higher |
| Comparative Example 3 - 3 | Glass Fiber Paper | None | PP Film (Both Surface) | 15.3 |
| Example 3 - 1 | Glass Fiber Paper | PVOH | None | 0.012 |
| Example 3 - 2 | Glass Fiber Paper | PVOH | PP Film (One Surface) | 250 or higher |
| Comparative Example 3 - 4 | PP Sheet | None | None | 1.1 |
| Comparative Example 3 - 5 | Mica Sheet | None | None | 1.1 |

In Table 3, Comparative Example 3-1 shows the results of Experiment 3 carried out using the sample sheet 20a. Comparative Example 3-2 shows the results of Experiment 3 carried out using the sample sheet 20b. Comparative Example 3-3 shows the results of Experiment 3 carried out using the sample sheet 20c. Example 3-1 shows the results of Experiment 3 carried out using the sample sheet 20e. Comparative Example 3-4 shows the results of Experiment 3 carried out using the sample sheet 20g. Comparative Example 3-5 shows the results of Experiment 3 carried out using the sample sheet 20h.

In the results of Experiment 3, it was found that when a PP film was attached to one or both surfaces of a piece of glass fiber paper, the resistance between the brass plate 24 and the brass plate 25 increased. From these results, it was found that by attaching a PP film, it was possible to obtain a partition member 10A having desirable insulating properties in the thickness direction.

The results of Experiments 1 to 3 are summarized as follows. A piece of glass fiber paper is employed as the porous sheet 1, and a PP film is attached to one or both surfaces of the piece of glass fiber paper to form the resin layer 3a (2b) or the resin layers 3a and 3b (the sample sheets 20b, 20c: Comparative Examples 1-2, 1-3, 2-2, 2-3, 3-2, and 3-3). In these cases, the water retention properties (water-holding properties) and the insulation properties when water is absorbed therein are improved compared to the piece of glass fiber paper alone (the sample sheet 20a: Comparative Examples 1-1, 2-1, and 3-1).

A piece of glass fiber paper is employed as the porous sheet 1, and at least either the surface or the inside of the porous sheet 1 is coated with PVOH, which is a water absorbing material, and thus a water absorbing layer (where a water absorbing material is distributed) is formed (the sample sheet 20d: Examples 1-1, 2-1, and 3-1) . In these cases, the water absorption amount and the water retention properties are improved compared to the piece of glass fiber paper alone (sample sheet 20a: Comparative Examples 1-1, 2-1, and 3-1).

A piece of glass fiber paper is employed as the porous sheet 1, and at least either the surface or the inside of the porous sheet 1 is coated with PVOH, which is a water absorbing material, and thus a water absorbing layer (where a water absorbing material is distributed) is formed. Furthermore, a PP film is attached to one or both surfaces of the porous sheet 1 to form the resin layer 3a (3b) or the resin layers 3a and 3b (the sample sheets 20d and 20e: Examples 1-2, 1-3, 2-2, 2-3, and 3-1) . In these cases, it is possible to obtain more desirable water absorption amount and water retention properties than in the sample sheets 20a and 20b. The sample sheet 20e can also have desirable insulating properties in addition to a desirable water absorption amount and water retention properties. The configurations described in the above embodiment can be combined as appropriate without departing from the purpose of the invention.

## Claims

1. A partition member that separates objects to be separated from each other, the partition member comprising:
a porous sheet; and
a water absorbing material provided at least either on a surface of the porous sheet or inside the porous sheet, wherein
the partition member that has dimensions of 100 mm × 60 mm and has been stored for 24 hours at a temperature of 25°C, a humidity of 40%, and an atmospheric pressure of 1 atm is used as a sample, and a ratio of a water absorption volume when a portion of 10 mm from an lower end of a 60 mm side of the sample is immersed in water for 2 minutes, to a volume of the sample {the water absorption volume (cm³) divided by a volume (cm³) of the partition member} is in a range of 0.1 to 0.9.

2. The partition member according to claim 1, further comprising
an insulating layer formed on a surface of the porous sheet located in a thickness direction thereof.

3. The partition member according to claim 2, wherein
a ratio of a thickness of the insulating layer to a thickness of the porous sheet (the thickness of the insulating layer divided by the thickness of the porous sheet) is in a range of 0.0001 to 0.1.

4. The partition member according to any one of claims 1 to 3, wherein
the porous sheet is a glass fiber sheet, an inorganic fiber sheet, an inorganic particle sheet, a piece of paper, or a combination thereof.

5. The partition member according to any one of claims 1 to 4, wherein
the water absorbing material contains a water absorbing resin.

6. The partition member according to claim 5, wherein
the water absorbing resin contains polyvinyl alcohol.

7. The partition member according to any one of claims 1 to 6, wherein
the insulating layer is a resin film attached to the porous sheet.

8. The partition member according to claim 7, wherein
the resin film is made of polypropylene.

9. The partition member according to any of claims 1 to 8, wherein
the partition member that has dimensions of 100 mm × 60 mm and has been stored for 24 hours at a temperature of 25°C, a humidity of 40%, and an atmospheric pressure of 1 atm is used as a sample, and a water absorption amount maintenance rate after 30 minutes, relative to a water absorption amount when a portion of 10 mm from a lower end of a 60 mm side of the sample is immersed in water for 2 minutes, is in a range of 60% to 100% by weight.

10. The partition member according to any one of claims 1 to 9, wherein
the partition member separates batteries from each other, or a battery and a member other than the battery from each other.

11. A battery module comprising the partition member according to any one of claims 1 to 10.

12. A battery pack comprising the partition member according to any one of claims 1 to 10.
